# EUROPEAN PATENT SPECIFICATION

(11) **EP 0 293 135 B1**
(45) Date of publication and mention of the grant of the patent: **20.07.1994**
(21) Application number: 88304520.5
(22) Date of filing: 18.05.1988
(51) Int. Cl.: H04N 5/76, H01R 29/00, H01R 31/06, G11B 31/00

(54) **Cable adapter including a switch**
Kabeladapter, der einen Umschalter enthält
Adaptateur de câble comprenant un commutateur

(30) Priority: 29.05.1987 JP 133922/87
(43) Date of publication of application: 30.11.1988
(73) Proprietor: SONY CORPORATION, Tokyo 141 (JP)
(72) Inventor: Isobe, Akira, 6-7-35 Kitashinagawa Tokyo 141 (JP); Anzai, Tsutomu, 6-7-35 Kitashinagawa Tokyo 141 (JP)
(74) Representative: Purvis, William Michael Cameron

(56) References cited:
- EP-A- 0 094 896
- DE-A- 2 139 468
- DE-B- 1 009 264
- FR-A- 1 252 707
- US-A- 2 484 092
- US-A- 4 276 562
- US-A- 4 424 591
- US-A- 4 463 382
- US-A- 4 527 204

## Description

The invention relates to a cable adapter including a switch.

Such a cable adapter may be suitable for use in the case where, for example, a camera integrated type VTR is connected to a television receiver.

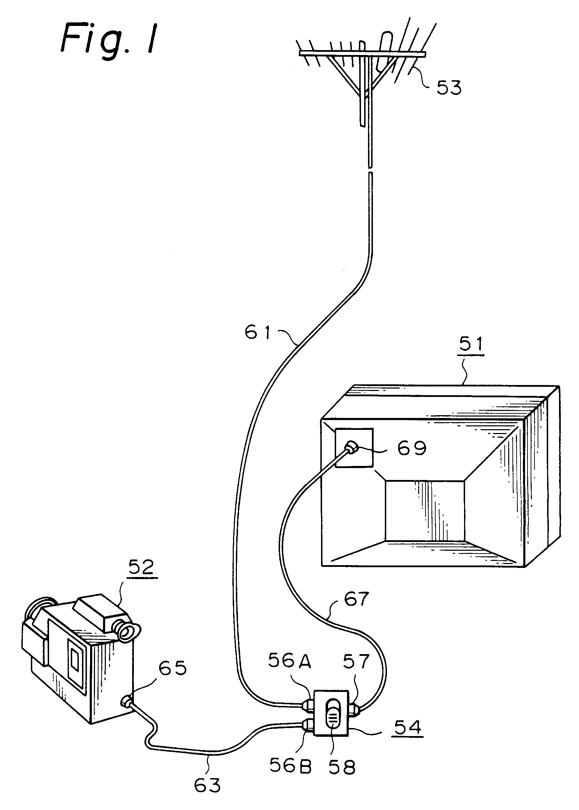

As shown in Figure 1 of the accompanying drawings, previously when a camera integrated VTR 52 is connected to a television receiver 51 having no video input terminal (an input terminal of a base band signal which is not modulated to a high frequency signal i.e. an RF signal), a cable adapter 54 with a switch to change over a reception signal from a television antenna 53 and an RF output signal from the VTR is used.

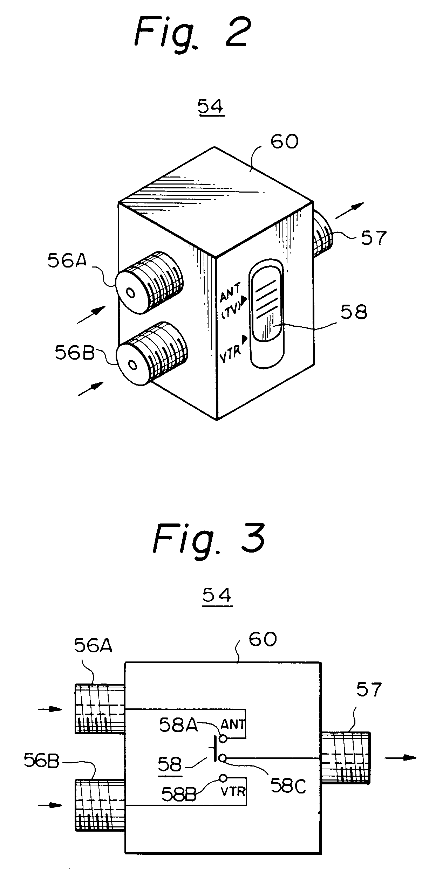

As shown in Figures 2 and 3, the cable adapter 54 has input terminals 56A and 56B, an output terminal 57, and a switch 58. F-type connectors may be used as the input terminals 56A and 56B and the output terminal 57 and a slide switch may be used as the switch 58. The input terminals 56A and 56B, the output terminal 57, and the switch 58 are integrally arranged in a housing 60. As shown in Figure 3, a contact 58A of the switch 58 arranged in the housing 60 is connected with the input terminal 56A, a contact 58B of the switch 58 is connected to the input terminal 56B and a contact 58C is connected to the output terminal 57. When the switch 58 is switched so that the contacts 58A and 58C are connected, a signal from the input terminal 56A can be taken out from the output terminal 57. When the switch 58 is switched so that the contacts 58B and 58C can be connected, a signal from the input terminal 58B can be taken out from the output terminal 57.

In Figure 1, a cable 61 which leads to the television antenna 53 is shown connected to the input terminal 56A of the cable adapter 54. One end of a cable 63 is connected to an RF output terminal 65 of the VTR 52. The other end of the cable 63 is connected to the input terminal 56B of the cable adapter 54. One end of a cable 67 is connected to an antenna terminal 69 of the television receiver 51. The other end of the cable 67 is connected to the output terminal 57 of the cable adapter 54.

When a broadcast television programme is to be displayed by the television receiver 51, the switch 58 of the cable adapter 54 is switched so as to connect the contacts 58A and 58C. When a reproduced image from the VTR 52 is to be displayed by the television receiver 51, the switch 58 of the cable adapter 54 is switched so as to connect the contacts 58B and 58C.

With such a cable adaptor 54 having a switch, the reproduced image from the VTR 52 can be easily displayed by the television receiver 51 having no video input terminal. However, when such a cable adapter 54 is used, the three cables 61, 63, and 67 are needed to connect together the television receiver 51, the VTR 52, and the television antenna 53. Thus, there is a problem such that the wiring of the three cables 61, 63, and 67 becomes complicated. On the other hand, before the VTR 52 is connected to the television receiver 51 by using the cable adapter 54, the cable 61 from the television antenna 53 can be directly connected to the antenna terminal 69 of the television receiver 51. As compared with the length of the cable 61 at this terminal, the length of the cable 61 when the cable adapter 54 is used becomes longer. Further, in the conventional cable adapter 54, as shown in Figures 2 and 3, since the same type of connectors (for instance, plug type connectors in the case of the NTSC system) are used as the input terminals 56A and 56B and the output terminal 57, there is a danger that the cables will be erroneously connected. In addition, there is a large influence by signal interference among the cables.

Patent specification EP-A-094896 discloses a video adapter which can connect a video recorder to another video recorder or to a television receiver and comprising a plug with pairs of input terminals at one end to which the video recorders can be connected and an output at the other end to which the television receiver can be connected. The text states that a switch is included to change over the connections as desired.

Patent specification US-A-4 463 383 discloses a device in two parts connected by a two conductor cable, one part comprising a power plug and having a power socket therein into which a video game can be plugged and the other part including a jack to receive an RF output cable of the video game, twin leads for connection to antenna terminals of a television receiver and a connector to mate with an antenna downlead or a cable television service lead. When the video game is turned on, the resulting voltage drop operates switching devices in the units effective to disconnect the antenna downlead from the television receiver and connect the video game thereto.

According to the invention there is provided a cable adapter comprising:
(a) a first input terminal to be connected to an antenna terminal;
(b) a second input terminal to be connected to an output terminal of an apparatus for modulating video signals into radio frequency signals;
(c) an output terminal to be connected to an antenna input terminal of a television receiver; and
(d) switching means for selecting input signals from one or other of said first and second input terminals;
   characterised in that:
   the cable adapter has first and second connector parts which are remotely separated from each other, and at least one cable connecting the first and second connector parts;
   the first input terminal and the output terminal are closely positioned and integrated in the first connector part;
   the second input terminal and the switching means are closely positioned and integrated in the second connector part;
   the first input terminal and one input terminal of the switching means are connected by a first line of the cable;
   the output terminal of the first connector part and an output terminal of the switching means are connected by a second line of the cable;
   the second input terminal is connected to another input terminal of the switching means;
   the first and second lines of the cable are arranged in parallel fashion; and
   the switching means is a manual switching means and functions so as selectively to connect the first input terminal and the output terminal of the first connector part in a first switching position and the second input terminal and the output terminal of the first connector part in a second switching position.

The invention is diagrammatically illustrated by way of example in the accompanying drawings, in which:-
Figure 1 is a perspective view showing a conventional adapter for making a connection between a VTR and a television receiver;
Figures 2 and 3 are respectively a perspective view and a connection diagram of the adapter of Figure 1;
Figure 4 is a perspective view of one embodiment of a cable adapter according to the invention;
Figure 5 is a connection diagram of the adapter of Figure 4;
Figures 6, 7 and 8 are perspective views for explaining the embodiment of the invention;
Figure 9 is a plan view showing another embodiment of a cable adapter according to the invention;
Figure 10 is a plan view showing a further another embodiment of the invention; and
Figure 11 is a plan view showing an embodiment of the invention utilising the PAL system.

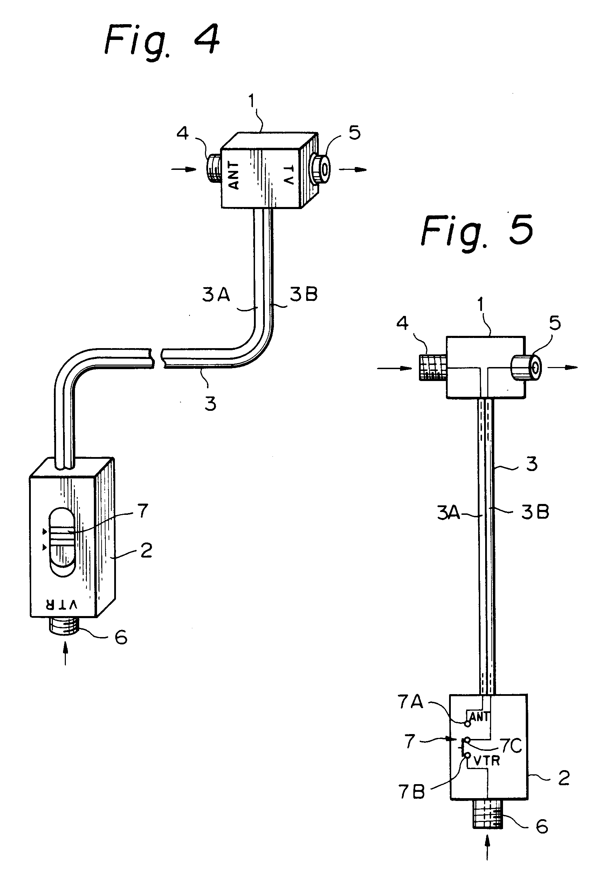

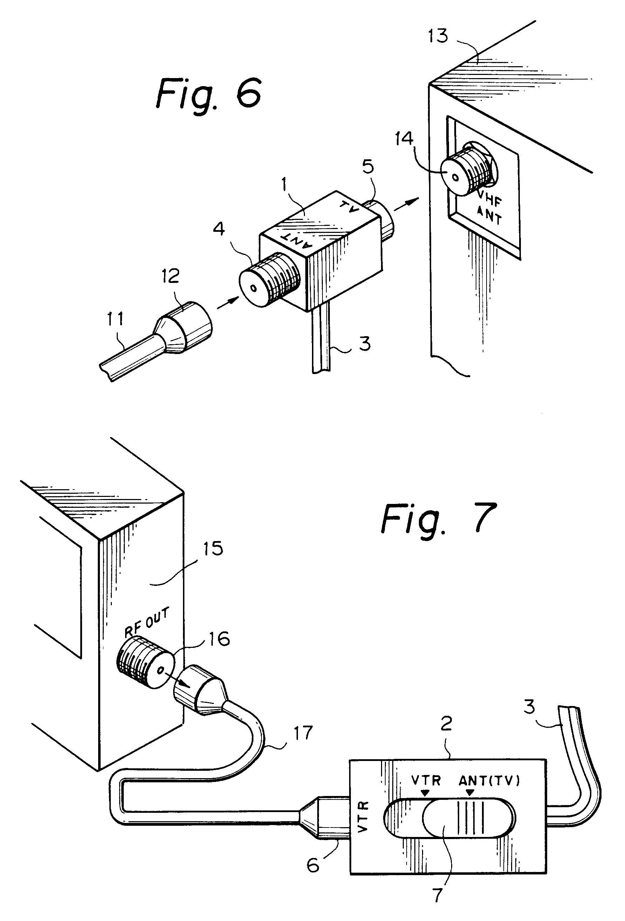

Referring to Figures 4 and 5, a cable adapter comprises a connector part 1, a connector part 2, and a cable 3 to connect the connector parts 1 and 2. An input terminal 4 and an output terminal 5 are provided in the connector part 1. For example, plug and jack F-type connectors can be used as the input terminal 4 and the output terminal 5. An input terminal 6 and a switch 7 are provided in the connector part 2. For example, the plug of the F-type connector is used as the input terminal 6. The cable 3 is a parallel line comprising two coaxial cables 3A and 3B.

As shown in Figure 5, the input terminal 4 of the connector part 1 and a contact 7A of the switch 7 in the connector part 2 are connected by the cable 3A. The output terminal 5 of the connector part 1 and a contact 7C of the switch 7 in the connector section 2 are connected by the cable 3B. The input terminal of the connector part 2 is connected to a terminal 7B of the switch 7.

A slide switch can be used as the switch 7. Either the signal which is input to the input terminal 4 of the connector part 1 or the signal which is input to the input terminal 6 of the connector part 2 can be selectively output from the output terminal 5 of the connector part 1 by suitable switching of the switch 7. Thus, when the switch 7 is switched so as to connect the contacts 7A and 7C, a signal input to the input terminal 4 of the connector put 1 is output from the output terminal 5 of the connector part 1 throught the cable 3A, the switch 7, and the cable 3B. When the switch 7 is switched so as to connect the contacts 7B and 7C, a signal input to the input terminal 6 of the connector part 2 is output from the output terminal 5 of the connector part 1 through the switch 7 and the cable 3B.

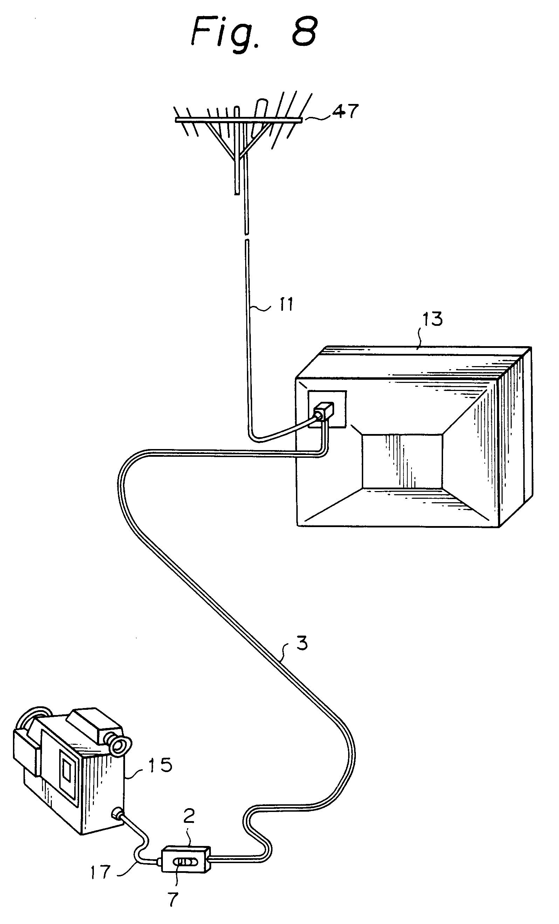

As shown in Figures 6 and 7, a television receiver 13 and a camera integrated type VTR 15 can be connected using an embodiment of the invention. That is, as illustrated in Figure 6, a connector 12 of a cable 11 which leads from a television antenna is connected to the input terminal 4 of the connector part 1. The output terminal 5 of the connector 1 is connected to an antenna input terminal 14 of the television receiver 13. On the other hand, as shown in Figure 7, the input terminal 6 of the connector part 2 is connected to an output terminal 16 of the camera integrated type VTR 15 by a cable 17. Figure 8 shows the state after completion of the connection and includes an antenna 47.

A plug connector is used as the antenna input terminal of the television receiver of the NTSC system on the basis of its standard, while a jack connector is used as the connector of the cable led out from the television antenna. Therefore, a plug connector is used as the input terminal 4 of the connector part 1 and a jack connector is used as the output terminal 5. Due to the different plug and jack connectors used as the input terminal 4 and the output terminal 5 which are arranged for the connector part 1, misconnection will hardly ever occur.

As mentioned above, in this embodiment, either the signal which is input to the input terminal 4 of the connector part 1 or the signal which is input to the input terminal 6 of the connector part 2 can selectively be output from the output terminal 5 of the connector part 1 by the switching operation of the switch 7. Thus, either the broadcast television programme received by the television antenna 47 or the output of the VTR 15 can be selectively supplied to the television receiver 13 by the operation of the switch 7. Namely, when the switch 7 is switched so as to connect the contacts 7A and 7C, the signal received by the television antenna 47 is supplied to the antenna input terminal 14 of the television receiver 13. When the switch 7 is switched so as to connect the contacts 7B and 7C, the output of the VTR 15 is supplied to the antenna input terminal 14 of the television receiver 13.

Figure 8 shows the state in which the television receiver 13, the VTR 15, and the television antenna 47 are connected by using this embodiment. As shown in Figure 8, the connector part 1 is provided adjacent the television receiver 13 whereas the connector part 2 is provided adjacent the VTR 15. Therefore, the television receiver 13 and the camera integrated type VTR 15 can be connected by only the cable 3 comprising the parallel line cables 3A and 3B, so that a plurality of cables do not complicatedly cross. Since the cable 11 from the television antenna 47 is connected to the input terminal 4 of the connector section 1 near the television receiver 13, the length of the cable between the antenna and the receiver does not significantly change.

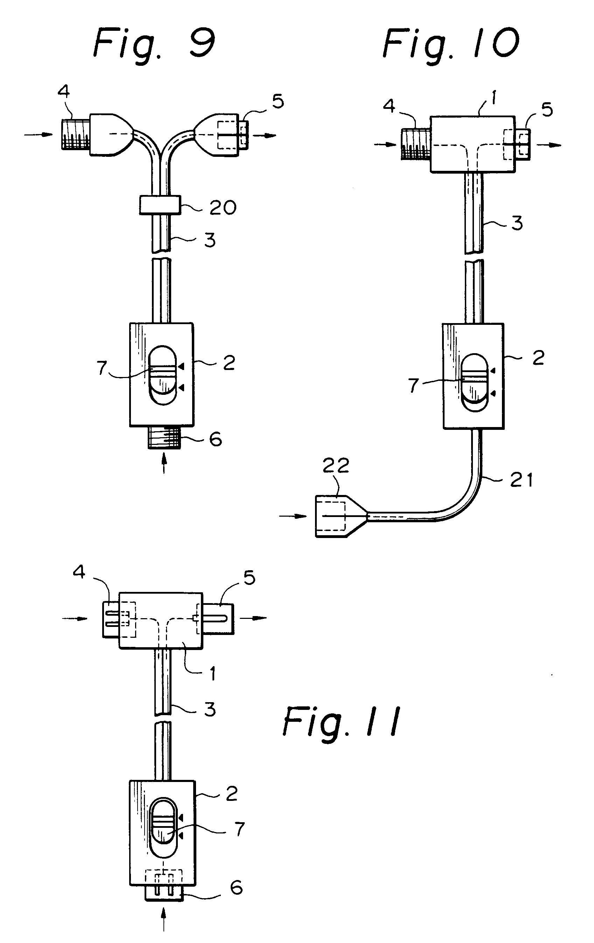

In the embodiment described above with reference to Figures 4 to 8, the input terminal 4 and the output terminal 5 are integrated in the connector part 1. However, as shown in Figure 9, it is also possible to have the input terminal 4 and the output terminal 5 separately provided and fixed by a clamp 20.

Further, instead of providing the input terminal 6 on the connector part 2, as shown in Figure 9, Figure 10 shows that it is possible for a cable 21 to be lead out of the connector part 2 and for a connector 22 to be connected to an RF output terminal of a camera integrated type VTR to be attached to the cable 21. With this structure, when the camera integrated type VTR 15 is connected, the separate cable 17 of Figures 7 and 8 becomes unnecessary.

When the invention is similarly applied to the PAL system, as shown in Figure 11, a jack connector is used as the input terminal 4 of the connector part 1, a plug connector is used as the output terminal 5, and a jack connector is used as the input terminal 6 of the connector section 2.

Since the connector part 1 is disposed adjacent the television receiver 13, the connector part 2 is disposed adjacent the camera integrated type VTR 15, and the connector parts 1 and 2 are connected by the cable 3 as a parallel line, a plurality of cables need not complicatedly cross. On the other hand, since the cable 11 from the television antenna is connected to the input terminal 4 of the connector part 1 near the television receiver 13, there is no need for the length of the cable 11 to change. Further, since different plug and jack connectors are used as the input terminal 4 and the output terminal 5 of the connector part 1, misconnection is unlikely to occur.

## Claims

1. A cable adapter comprising:
(a) a first input terminal (4) to be connected to an antenna terminal;
(b) a second input terminal (6) to be connected to an output terminal of an apparatus for modulating video signals into radio frequency signals;
(c) an output terminal (5) to be connected to an antenna input terminal of a television receiver; and
(d) switching means (7) for selecting input signals from one or other of said first and second input terminals (4,6);
characterised in that:
the cable adapter has first (1) and second (2) connector parts which are remotely separated from each other, and at least one cable (3) connecting the first and second connector parts;
the first input terminal (4) and the output terminal (5) are closely positioned and integrated in the first connector part (1);
the second input terminal (6) and the switching means (7) are closely positioned and integrated in the second connector part (2);
the first input terminal (4) and one input terminal (7A) of the switching means (7) are connected by a first line (3A) of the cable (3);
the output terminal (5) of the first connector part (1) and an output terminal (7C) of the switching means (7) are connected by a second line (3B) of the cable (3);
the second input terminal (6) is connected to another input terminal (7B) of the switching means (7);
the first and second lines (3A,3B) of the cable (3) are arranged in parallel fashion; and
the switching means (7) is a manual switching means and functions so as selectively to connect the first input terminal (4) and the output terminal (5) of the first connector part (1) in a first switching position and the second input terminal (6) and the output terminal (5) of the first connector part (1) in a second switching position.

## Patentansprüche

1. Kabeladapter mit
a) einem ersten Eingangsanschluß (4), der mit einem Antennenanschluß zu verbinden ist,
b) einem zweiten Eingangsanschluß (6), der mit einem Ausgangsanschluß eines Geräts zur Modulation von Videosignalen zu Hochfrequenzsignalen zu verbinden ist,
c) einem Ausgangsanschluß (5), der mit einem Antenneneingangsanschluß eines Fernsehempfängers zu verbinden ist, sowie
d) einem Umschaltmittel (7) zum Wählen zwischen Eingangssignalen des ersten Eingangsanschlusses (4) und des zweiten Eingangsanschlusses (6),
dadurch gekennzeichnet,
daß der Kabeladapter ein erstes Steckerteil (1) und ein zweites Steckerteil (2), die räumlich getrennt sind, sowie mindestens ein Kabel (3), das das erste Steckerteil (1) und das zweite Steckerteil (2) miteinander verbindet, aufweist,
der erste Eingangsanschluß (4) und der Ausgangsanschluß (5) nahe aneinander angeordnet und im ersten Steckerteil (1) integriert sind,
der zweite Eingangsanschluß (6) und das Umschaltmittel (7) nahe aneinander angeordnet und im zweiten Steckerteil (2) integriert sind,
der erste Eingangsanschluß (4) und eine Eingangsklemme (7A) des Umschaltmittels (7) durch eine erste Leitung (3A) des Kabels (3) miteinander verbunden sind,
der Ausgangsanschluß (5) des ersten Steckerteils (1) und eine Ausgangsklemme (7C) des Umschaltmittels (7) durch eine zweite Leitung (3B) des Kabels (3) miteinander verbunden sind,
der zweite Eingangsanschluß (6) mit einer weiteren Eingangsklemme (7B) des Umschaltmittels (7) verbunden ist,
die erste Leitung (3A) und die zweite Leitung (3B) des Kabels (3) parallel angeordnet sind, und
das Umschaltmittel (7) ein manuelles Umschaltmittel ist und dazu dient, wahlweise den ersten Eingangsanschluß (4) und den Ausgangsanschluß (5) des ersten Steckerteils (1) in einer ersten Schaltstellung oder den zweiten Eingangsanschluß (6) und den Ausgangsanschluß (5) des ersten Steckerteils (1) in einer zweiten Schaltstellung miteinander zu verbinden.

## Revendications

1. Adaptateur de câble comprenant :
- une première borne d'entrée (4) à raccorder à une borne d'antenne;
- une seconde borne d'entrée (6) à raccorder à une borne de sortie d'un dispositif de modulation de signaux vidéo en signaux de fréquence radio;
- une borne de sortie (5) raccordée à une borne d'entrée d'antenne d'un récepteur de télévision; et
- un moyen de commutation (7) pour choisir des signaux d'entrée de l'une ou de l'autre desdites première et seconde bornes d'entrée (4, 6);
adaptateur caractérisé en ce que :
l'adaptateur de câble possède des première (1) et seconde (2) parties de connecteur qui sont séparées l'une de l'autre et au moins un câble (3) raccordant les première et seconde parties de connecteur;
la première borne d'entrée (4) et la borne de sortie (5) sont rapprochées et intégrées à la première partie de connecteur (1);
la seconde borne d'entrée (6) et le moyen de commutation (7) sont rapprochés et intégrés à la seconde partie de connecteur (2);
la première borne d'entrée (4) et une borne d'entrée (7A) du moyen de commutation (7) sont raccordées par une première ligne (3A) du câble (32);
la borne de sortie (5) de la première partie de connecteur (1) et une borne de sortie (7C) du moyen de commutation (7) sont raccordées par une seconde ligne (3B) du câble (3);
la seconde borne d'entrée (6) est raccordée à une autre borne d'entrée (7B) du moyen de commutation (7);
les première et seconde lignes (3A, 3B) du câble (3) sont disposées en parallèle; et
le moyen de commutation (7) est un moyen de commutation manuel et agit de façon à raccorder, de façon sélective, la première borne d'entrée (4) et la borne de sortie (5) de la première partie de connecteur (1) dans une première position de commutation et la seconde borne d'entrée (6) et la borne de sortie (5) de la première partie de connecteur (1) dans une seconde position de commutation.
